# EUROPEAN PATENT SPECIFICATION

(11) **EP 1 991 936 B1**
(45) Date of publication and mention of the grant of the patent: **30.10.2013**
(21) Application number: 07752590.5
(22) Date of filing: 06.03.2007
(51) Int. Cl.: G06F 17/30, H04L 29/06

(54) **NETWORK TOPOLOGY FOR A SCALABLE DATA STORAGE SYSTEM**
NETZTOPOLOGIE FÜR EIN SKALIERBARES DATENSPEICHERSYSTEM
TOPOLOGIE DE RÉSEAU POUR SYSTÈME DE STOCKAGE DE DONNÉES À GÉOMÉTRIE VARIABLE

(30) Priority: 08.03.2006 US 371678
(43) Date of publication of application: 19.11.2008
(73) Proprietor: Harmonic Inc., San Jose, CA 95134 (US)
(72) Inventor: SFARTI, Adrian, Cupertino, California 95014 (US); CRAIG, Donald, M., Cupertino, California 95014 (US); WANIGASEKARA-MOHOTTI, Don, Harschadath, Santa Clara, California 95050 (US)
(74) Representative: Roberts, Gwilym Vaughan
(86) International application number: PCT/US2007/005902
(87) International publication number: WO 2007/103483

(56) References cited:
- WO-A1-03/012699
- US-A1- 2004 028 063
- US-A1- 2004 133 606
- US-A1- 2005 050 185

## Description

An embodiment of the invention is generally directed to electronic data storage systems that have relatively high capacity, performance and data availability, and more particularly to ones that are scalable with respect to adding storage capacity and clients. Other embodiments are also described and claimed.

### BACKGROUND

In today's information intensive environment, there are many businesses and other institutions that need to store huge amounts of digital data. These include entities such as large corporations that store internal company information to be shared by thousands of networked employees; online merchants that store information on millions of products; and libraries and educational institutions with extensive literature collections. A more recent need for the use of large-scale data storage systems is in the broadcast television programming market. Such businesses are undergoing a transition, from the older analog techniques for creating, editing and transmitting television programs, to an all-digital approach. Not only is the content (such as a commercial) itself stored in the form of a digital video file, but editing and sequencing of programs and commercials, in preparation for transmission, are also digitally processed using powerful computer systems. Other types of digital content that can be stored in a data storage system include seismic data for earthquake prediction, and satellite imaging data for mapping.

A powerful data storage system referred to as a media server is offered by Omneon Video Networks of Sunnyvale, California (the assignee of this patent application). The media server is composed of a number of software components that are running on a network of server machines. The server machines have mass storage devices such as rotating magnetic disk drives that store the data. The server accepts requests to create, write or read a file, and manages the process of transferring data into one or more disk drives, or delivering requested read data from them. The server keeps track of which file is stored in which drives. Requests to access a file, *i.e.* create, write, or read, are typically received from what is referred to as a client application program that may be running on a client machine connected to the server network. For example, the application program may be a video editing application running on a workstation of a television studio, which needs a particular video clip (stored as a digital video file in the system).

Video data is voluminous, even with compression in the form of, for example, Motion Picture Experts Group (MPEG) formats. Accordingly, data storage systems for such environments are designed to provide a storage capacity of tens of terabytes or greater. Also, high-speed data communication links are used to connect the server machines of the network, and in some cases to connect with certain client machines as well, to provide a shared total bandwidth of one hundred Gb/second and greater, for accessing the system. The storage system is also able to service accesses by multiple clients simultaneously.

To help reduce the overall cost of the storage system, a distributed architecture is used. Hundreds of smaller, relatively low cost, high volume manufactured disk drives (currently each unit has a capacity of one hundred or more Gbytes) may be networked together, to reach the much larger total storage capacity. However, this distribution of storage capacity also increases the chances of a failure occurring in the system that will prevent a successful access. Such failures can happen in a variety of different places, including not just in the system hardware (*e.g.*, a cable, a connector, a fan, a power supply, or a disk drive unit), but also in software such as a bug in a particular client application program. Storage systems have implemented redundancy in the form of a redundant array of inexpensive disks (RAID), so as to service a given access (*e.g.*, make the requested data available), despite a disk failure that would have otherwise thwarted that access. The systems also allow for rebuilding the content of a failed disk drive, into a replacement drive.

A storage system should also be scalable, to easily expand to handle larger data storage requirements as well as an increasing client load, without having to make complicated and extensive hardware and software replacements.

US2004/0133606 discloses Directory aggregation for files distributed over a plurality of servers in a switched file system. A file switch, logically positioned between client computers and file servers in a computer network, distributes user files among multiple file servers using an aggregated directory mechanism.

### SUMMARY OF THE INVENTION

According to an aspect of the invention there is provided a data storage system as defined in Claim 1.

### BRIEF DESCRIPTION OF THE DRAWINGS

The embodiments of the invention are illustrated by way of example and not by way of limitation in the figures of the accompanying drawings in which like references indicate similar elements. It should be noted that references to "an" embodiment of the invention in this disclosure are not necessarily to the same embodiment, and they mean at least one.

**Fig. 1** shows a data storage system, in accordance with an embodiment of the invention, in use as part of a video processing environment.

**Fig. 2** shows a system architecture for the data storage system, in accordance with an embodiment of the invention.

**Fig. 3** shows a network topology for an embodiment of the data storage system.

**Fig. 4** shows a software architecture for the data storage system, in accordance with an embodiment of the invention.

**Fig. 5** shows a block diagram of a network topology for a data storage system having eight server groups.

**Fig. 6** shows a block diagram of a network topology for the data storage system, upgraded from eight to sixteen server groups.

**Fig. 7** is a block diagram of the physical connections between different hardware components of an example server group and internal switch combination.

**Fig. 8** shows a block diagram of an example cluster.

**Fig. 9** shows a block diagram of another network topology for a data storage system that uses clusters.

**Figs. 10** and **11**, depict an example data storage system that has a network topology, in accordance with an embodiment of the invention.

**Fig.12**, depicts a network topology for a data storage system, in accordance with another embodiment of the invention.

**Fig. 13** is a flow diagram of a method for providing a scalable data storage system, in accordance with an embodiment of the invention.

### DETAILED DESCRIPTION

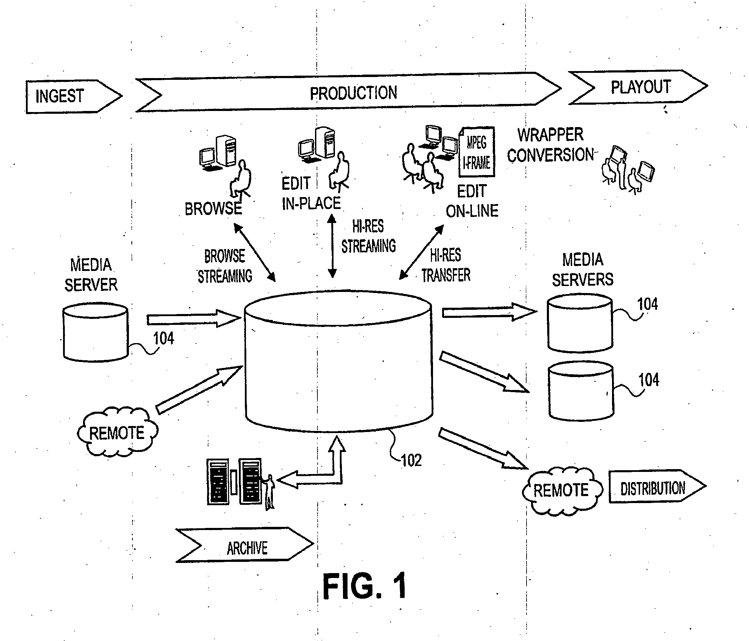

An embodiment of the invention is a data storage system that may better achieve demanding requirements of capacity, performance and data availability, with a more scalable architecture. **Fig. 1** depicts such a storage system as part of a video and audio information processing environment. It should be noted, however, that the data storage system as well as its components or features described below can alternatively be used in other types of applications (*e.g.*, a literature library; seismic data processing center; merchant's product catalog; central corporate information storage; etc.) The storage system 102 also referred to as an Omneon content library (OCL) system, provide data protection, as well as hardware and software fault tolerance and recovery.

The system 102 can be accessed using client machines or a client network that can take a variety of different forms. For example, content files (in this example, various types of digital media files including MPEG and high definition (HD)) can be requested to be stored, by a media server 104. As shown in **Fig. 1**, the media server 104 can interface with standard digital video cameras, tape recorders, and a satellite feed during an "ingest" phase of the media processing, to create such files. As an alternative, the client machine may be on a remote network, such as the Internet. In the "production phase", stored files can be streamed from the OCL system to client machines for browsing, editing, and archiving. Modified files may then be sent from the system 102 to media servers 104, or directly through a remote network for distribution, during a "playout" phase.

The OCL system provides a relatively high performance, high availability storage subsystem with an architecture that may prove to be particularly easy to scale as the number of simultaneous client accesses increase or as the total storage capacity requirement increases. The addition of media servers 104 (as in **Fig. 1**) and a content gateway (to be described below) enables data from different sources to be consolidated into a single high performance/ high availability system, thereby reducing the total number of storage units that a business must manage. In addition to being able to handle different types of workloads (including different sizes of files, as well as different client loads), an embodiment of the system 102 may have features including automatic load balancing, a high speed network switching interconnect, data caching, and data replication. According to an embodiment of the invention, the OCL system scales in performance as needed from 20 Gb/second on a relatively small, or less than 66 terabyte system, to over 600 Gb/second for larger systems, that is, over 1 petabyte. For a directly connected client, this translates into, currently, an effective 60-100 megabyte per second transfer rate, and for content gateway attached clients, 40 - 60 megabytes per second. Such numbers are, of course, only examples of the current capability of the OCL system, and are not intended to limit the full scope of the invention being claimed.

An embodiment of the invention is an OCL system that is designed for non-stop operation, as well as allowing the expansion of storage, clients and networking bandwidth between its components, without having to shutdown or impact the accesses that are in process. The OCL system preferably has sufficient redundancy such that there is no single point of failure. Data stored in the OCL system has multiple replications, thus allowing for a loss of mass storage units (*e.g.*, disk drive units) or even an entire server, without compromising the data. In contrast to a typical RAID system, a replaced drive unit of the OCL system need not contain the same data as the prior (failed) drive. That is because by the time a drive replacement actually occurs, the pertinent data (file slices stored in the failed drive) had already been saved elsewhere, through a process of file replication that had started at the time of file creation. Files are replicated in the system, across different drives, to protect against hardware failures. This means that the failure of any one drive at a point in time will not preclude a stored file from being reconstituted by the system, because any missing slice of the file can still be found in other drives. The replication also helps improve read performance, by making a file accessible from more servers.

In addition to mass storage unit failures, the OCL system may provide protection against failure of any larger, component part or even a complete component (*e.g.*, a metadata server, a content server, and a networking switch). In larger systems, such as those that have three or more groups of servers arranged in respective enclosures or racks as described below, there is enough redundancy such that the OCL system should continue to operate even in the event of the failure of a complete enclosure or rack.

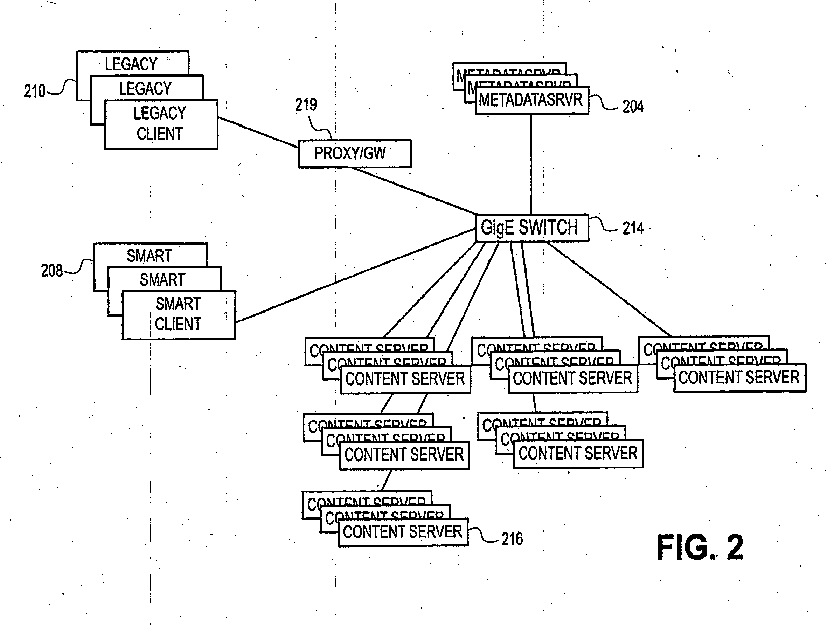

Referring now to **Fig. 2**, a system architecture for a data storage system connected to multiple clients is shown, in accordance with an embodiment of the invention. The system has a number of metadata server machines, each to store metadata for a number of files that are stored in the system. Software running in such a machine is referred to as a metadata server 204. A metadata server may be responsible for managing operation of the OCL system and is the primary point of contact for clients. Note that there are two types of clients illustrated, a smart client 208 and a legacy client 210. A smart client has knowledge of a current interface of the system and can connect directly to a system interconnect 214 (here including, for example, a Gb Ethernet networking switch) of the system. The system interconnect may act as a selective bridge between a number of content servers 216 and metadata servers 204 as shown. The other type of client is a legacy client that does not have a current file system driver (FSD) installed, or that does not use a software development kit (SDK) that is currently provided for the OCL system. The legacy client indirectly communicates with the system interconnect 214 through a proxy or content gateway 219 as shown, using a typical file system programming interface that is not specific to the OCL system.

The file system driver or FSD is software that is installed on a client machine, to present a standard file system interface, for accessing the OCL system. On the other hand, the software development kit or SDK allows a software developer to access the OCL directly from an application program. This option also allows OCL-specific functions, such as the replication factor setting to be described below, to be available to the user of the client machine.

In the OCL system, files are typically divided into slices when stored across multiple content servers. Each content server program runs on a different machine having its own set of one or more local disk drives. This is the preferred embodiment of a storage element for the system. Thus, the parts of a file are spread across different disk drives, *i.e.* in different storage elements. In a current embodiment, the slices are preferably of a fixed size and are much larger than a traditional disk block, thereby permitting better performance for large data files (*e.g.*, currently 8 Mbytes, suitable for large video and audio media files). Also, files are replicated in the system, across different drives, to protect against hardware failures. This means that the failure of any one drive at a point in time will not preclude a stored file from being reconstituted by the system, because any missing slice of the file can still be found in other drives. The replication also helps improve read performance, by making a file accessible from more servers. To keep track of what file is stored where (or where are the slices of a file stored), each metadata server program has knowledge of metadata (information about files) which includes the mapping between the file name of a newly created or previously stored file, and its slices, as well as the identify of those storage elements of the system that actually contain the slices.

The metadata server determines which of the content servers are available to receive the actual content or data for storage. The metadata server also performs load balancing, that is determining which of the content servers should be used to store a new piece of data and which ones should not, due to either a bandwidth limitation or a particular content server filling up. To assist with data availability and data protection, the file system metadata may be replicated multiple times. For example, at least two copies may be stored on each metadata server machine (and, for example, one on each hard disk drive unit). Several checkpoints of the metadata should be taken at regular time intervals. A checkpoint is a point in time snapshot of the file system or data fabric that is running in the system, and is used in the event of system recovery. It is expected that on most embodiments of the OCL system, only a few minutes of time may be needed for a checkpoint to occur, such that there should be minimal impact on overall system operation.

In normal operation, all file accesses initiate or terminate through a metadata server. The metadata server responds, for example, to a file open request, by returning a list of content servers that are available for the read or write operations. From that point forward, client communication for that file (*e.g.*, read; write) is directed to the content servers, and not the metadata servers. The OCL SDK and FSD, of course, shield the client from the details of these operations. As mentioned above, the metadata servers control the placement of files and slices, providing a balanced utilization of the content servers.

Although not shown in **Fig. 2**, a system manager may also be provided, executing for instance on a separate rack mount server machine, that is responsible for the configuration and monitoring of the OCL system.

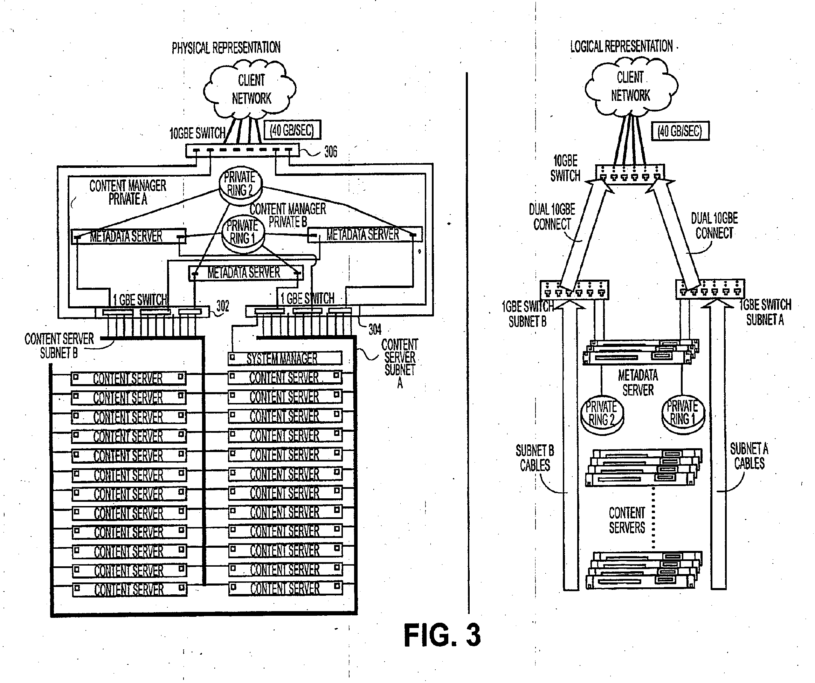

The connections between the different components of the OCL system, that is the content servers and the metadata servers, should provide the necessary redundancy in the case of a system interconnect failure. See **Fig. 3** which also shows a logical and physical network topology for the system interconnect of a relatively small OCL system. The connections are preferably Gb Ethernet across the entire OCL system, taking advantage of wide industry support and technological maturity enjoyed by the Ethernet standard. Such advantages are expected to result in lower hardware costs, wider familiarity in the technical personnel, and faster innovation at the application layers. Communications between different servers of the OCL system preferably uses current, Internet protocol (IP) networking technology. However, other interconnect hardware and software may alternatively be used, so long as they provide the needed speed of transferring packets between the servers.

One or more networking switches (*e.g.*, Ethernet switches, Infiniband switches) are preferably used as part of the system interconnect. Such a device automatically divides a network into multiple segments, acts as a high-speed, selective bridge between the segments, and supports simultaneous connections of multiple pairs of computers which may not compete with other pairs of computers for network bandwidth. It accomplishes this by maintaining a table of each destination address and its port. When the switch receives a packet, it reads the destination address from the header information in the packet, establishes a temporary connection between the source and destination ports, sends the packet on its way, and may then terminate the connection.

A switch can be viewed as making multiple temporary crossover cable connections between pairs of computers. High-speed electronics in the switch automatically connect the end of one cable (source port) from a sending computer to the end of another cable (destination port) going to the receiving computer, for example on a per packet basis. Multiple connections like this can occur simultaneously.

In the example topology of **Fig. 3**, multi Gb Ethernet switches 302, 304, 306 are used to provide the needed connections between the different components of the system. The current example uses 1 Gb Ethernet and 10 Gb Ethernet switches allowing a bandwidth of 40 Gb/second available to the client. However, these are not intended to limit the scope of the invention as even faster switches may be used in the future. The example topology of **Fig. 3** has two subnets, subnet A and subnet B in which the content servers are arranged. Each content server has a pair of network interfaces, one to subnet A and another to subnet B, making each content server accessible over either subnet. Subnet cables connect the content servers to a pair of switches, where each switch has ports that connect to a respective subnet. Each of these 1 Gb Ethernet switches has a dual 10 Gb Ethernet connection to the 10 Gb Ethernet switch which in turn connects to a network of client machines.

In this example, there are three metadata servers each being connected to the 1 Gb Ethernet switches over separate interfaces. In other words, each 1 Gb Ethernet switch has at least one connection to each of the three metadata servers. In addition, the networking arrangement is such that there are two private networks referred to as private ring 1 and private ring 2, where each private network has the three metadata servers as its nodes. The metadata servers are connected to each other with a ring network topology, with the two ring networks providing redundancy. The metadata servers and content servers are preferably connected in a mesh network topology as described here. An example physical implementation of the embodiment of **Fig. 3** would be to implement each content server in a separate server blade, all inside the same enclosure or rack. The Ethernet switches, as well as the three metadata servers could also be placed in the same rack. The invention is, of course, not limited to a single rack embodiment. Additional racks filled with content servers, metadata servers and switches may be added to scale the OCL system.

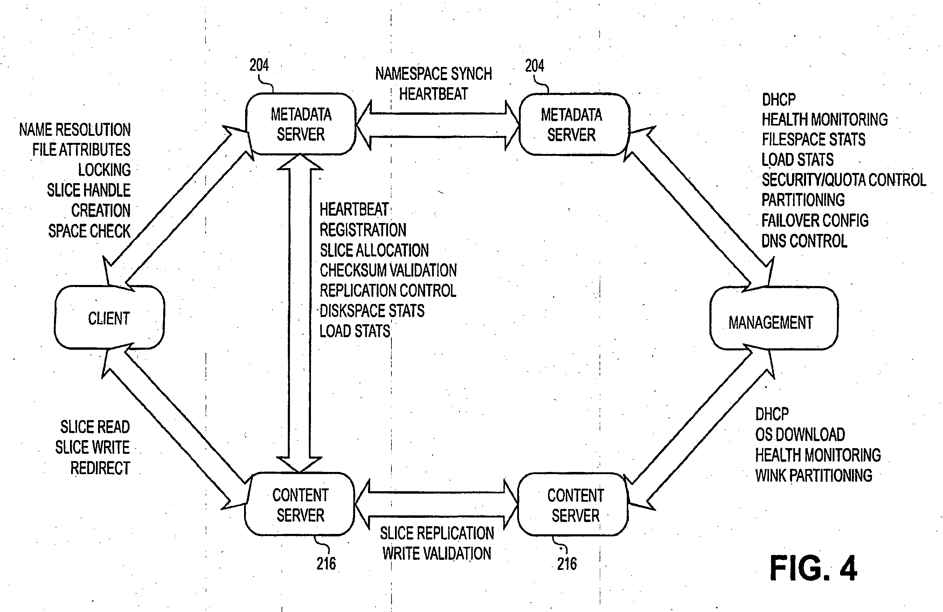

Turning now to **Fig. 4**, an example software architecture for the OCL system is depicted. The OCL system has a distributed file system program or data fabric that is to be executed in some or all of the metadata server machines, the content server machines, and the client machines, to hide complexity of the system from a number of client machine users. In other words, users can request the storage and retrieval of, in this case, audio and/or video information though a client program, where the file system or data fabric makes the OCL system appear as a single, simple storage repository to the user, A request to create, write, or read a file is received from a network-connected client, by a metadata server. The file system software or, in this case, the metadata server portion of that software, translates the full file name that has been received, into corresponding slice handles, which point to locations in the content servers where the constituent slices of the particular file have been stored or are to be created. The actual content or data to be stored is presented to the content servers by the clients directly. Similarly, a read operation is requested by a client directly from the content servers.

Each content server machine or storage element may have one or more local mass storage units, e.g. rotating magnetic disk drive units, and its associated content server program manages the mapping of a particular slice onto its one or more drives. The file system or data fabric implements file redundancy by replication. In the preferred embodiment, replication operations are controlled at the slice level. The content servers communicate with one another to achieve slice replication and obtaining validation of slice writes from each other, without involving the client.

In addition, since the file system or data fabric is distributed amongst multiple machines, the file system uses the processing power of each machine (be it a content server, a client, or a metadata server machine) on which it resides. As described below in connection with the embodiment of **Fig. 4**, adding a content server to increase the storage capacity automatically increases the total number of network interfaces in the system, meaning that the bandwidth available to access the data in the system also automatically increases. In addition, the processing power of the system as a whole also increases, due to the presence of a central processing unit and associated main memory in each content server machine. Adding more clients to the system also raises the processing power of the overall system. Such scaling factors suggest that the system's processing power and bandwidth may grow proportionally, as more storage and more clients are added, ensuring that the system does not bog down as it grows largeur.

Still referring to **Fig. 4**, the metadata servers are considered to be active members of the system, as opposed to being an inactive backup unit. In other words, the metadata servers of the OCL system are active simultaneously and they collaborate in the decision-making. For example, they collaborate in deciding how many times and on what drives to replicate slices of the files to be stored. For example, when a content server fails, the content that was stored on the content server is replicated from the remaining content servers in order to maintain the required replication factor for each slice. The replication process is supervised by the metadata servers. The replication process is split equally amongst the metadata servers, and each metadata server is responsible for its piece of the replication process. This allows the system to scale to handling more clients, as the client load is distributed amongst the metadata servers. As the client load increases even further, additional metadata servers can be added.

According to an embodiment of the invention, the amount of replication (also referred to as "replication factor") is associated individually with each file. All of the slices in a file preferably share the same replication factor. This replication factor can be varied dynamically by the user. For example, the OCL system's application programming interface (API) function for opening a file may include an argument that specifies the replication factor. This fine grain control of redundancy and performance versus cost of storage allows the user to make decisions separately for each file, and to change those decisions over time, reflecting the changing value of the data stored in a file. For example, when the OCL system is being used to create a sequence of commercials and live program segments to be broadcast, the very first commercial following a halftime break of a sports match can be a particularly expensive commercial. Accordingly, the user may wish to increase the replication factor for such a commercial file temporarily, until after the commercial has been played out, and then reduce the replication factor back down to a suitable level once the commercial has aired.

According to another embodiment of the invention, the content servers in the OCL system are arranged in groups. The groups are used to make decisions on the locations of slice replicas. For example, all of the content servers that are physically in the same equipment rack or enclosure may be placed in a single group. The user can thus indicate to the system the physical relationship between content servers, depending on the wiring of the server machines within the enclosures. Slice replicas are then spread out so that no two replicas are in the same group of content servers. This allows the OCL system to be resistant against hardware failures that may encompass an entire rack.

### Replication

Replication of slices is preferably handled internally between content servers. Clients are thus not required to expend extra bandwidth writing the multiple copies of their files. In accordance with an embodiment of the invention, the OCL system provides an acknowledgment scheme where a client can request acknowledgement of a number of replica writes that is less than the actual replication factor for the file being written. For example, the replication factor may be several hundred, such that waiting for an acknowledgment on hundreds of replications would present a significant delay to the client's processing. This allows the client to tradeoff speed of writing versus certainty of knowledge of the protection level of the file data. Clients that are speed sensitive can request acknowledgement after only a small number of replicas have been created. In contrast, clients that are writing sensitive or high value data can request that the acknowledgement be provided by the content servers only after all specified number of replicas has been created.

### Intelligent Slices

According to an embodiment of the invention, files are divided into slices when stored in the OCL system. In a preferred case, a slice can be deemed to be an intelligent object, as opposed to a conventional disk block or stripe that is used in a typical RAID or storage arear network (SAN) system. The intelligence derives from at least two features. First, each slice may contain information about the file for which it holds data. This makes the slice self-locating. Second, each slice may carry checksum information, making it self-validating. When conventional file systems lose metadata that indicates the locations of file data (due to a hardware failure or other failure), the file data can only be retrieved through a laborious manual process of trying to piece together file fragments. In accordance with an embodiment of the invention, the OCL system can use the file information that is stored in the slices themselves, to automatically piece together the files. This provides extra protection over and above the replication mechanism in the OCL system. Unlike conventional blocks or stripes, slices cannot be lost due to corruption in the centralized data structures.

In addition to the file content information, a slice also carries checksum information that may be created at the moment of slice creation. This checksum information is said to reside with the slice, and is carried throughout the system with the slice, as the slice is replicated. The checksum information provides validation that the data in the slice has not been corrupted due to random hardware errors that typically exist in all complex electronic systems. The content servers preferably read and perform checksum calculations continuously, on all slices that are stored within them. This is also referred to as actively checking for data corruption. This is a type of background checking activity which provides advance warning before the slice data is requested by a client, thus reducing the likelihood that an error will occur during a file read, and reducing the amount of time during which a replica of the slice may otherwise remain corrupted.

### Scalable Network Topology

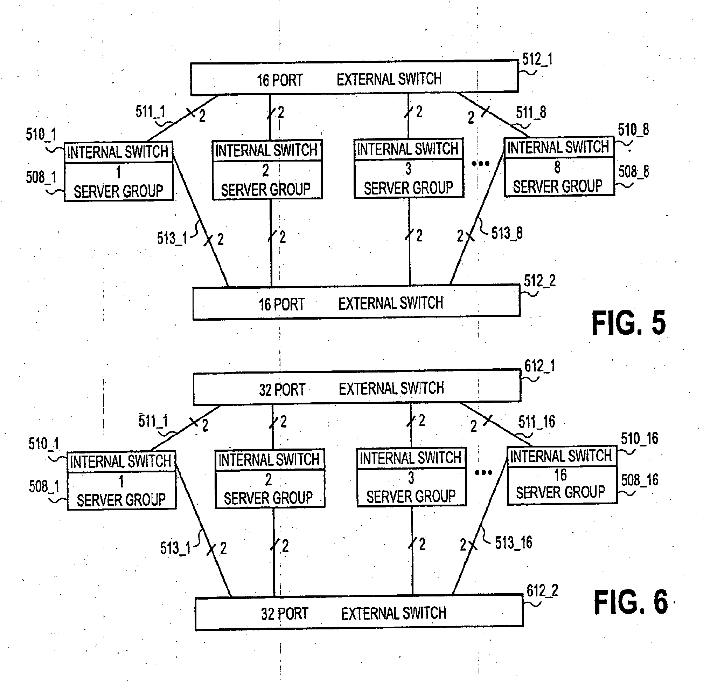

In accordance with another embodiment of the invention, a multi-node computer system, such as the OCL data storage system, has a physical network topology as depicted in **Fig. 5**. What is depicted is a scalable, distributed switching fabric that helps ensure that the redundancy of the switching network interconnect keeps pace with system complexity (e.g., as storage capacity or client bandwidth is increased). In accordance with an embodiment of the invention, as more data storage server racks are added to the system, the switching fabric is proportionally increased and distributed amongst the racks that make up the system. For instance, if the number of storage server units doubles, the number of "internal" switches that service them will double as well. As will be appreciated from the examples described below, this will also double the inter-unit bandwidth, thereby keeping up with the increase in storage capacity. As an example, **Fig. 5** shows a block diagram of a network topology for the OCL data storage system in which there are eight server groups 508. Associated with each server group 508 is an internal switch 510. Each server group has a number of data storage servers, where a file stored in the OCL system is spread across two or more of such servers in different groups. The data storage servers within a server group 508 are communicatively coupled to their associated internal switch 510. For instance, the server group 508 may have two or more content servers (content servers) that are connected to the internal switch 510 via a redundant link 511. The link 511 may include a pair of Ethernet cables where each cable has one end attached to a content server port and the other attached to a separate network interface port of the internal switch. As an example, each network interface port may be a 10 Gb Ethernet port.

Each of the internal packet switches 510 is communicatively coupled to an external packet switch 512_1. In this example, the external switch 512 has sixteen ports that are in use by eight server groups (two by each group). The external switch 512 has additional ports (not shown) that are communicatively coupled to client machines (not shown), to give client access to the storage system. Note that in this topology, client access to a data storage server is through that storage server's associated internal packet switch 510 and the external switch 512. The data storage servers of each server group 508 communicate, at a physical layer, with their respective internal packet switch 510, and not the external switch 512.

For redundancy, an additional external switch 512_2 may be added to the system as shown. In that case, there is a further redundant link 513 that connects each internal switch 510, to the external switch 512_2, e.g. through a further pair of ports that are connected via a pair of cables to a respective pair of ports in the external switch 512_2. The provision of the second external switch 512_2, in addition to providing redundant client access to the data storage servers (where once again for clarity, **Fig. 5** does not show connections from the external switch 512_2 to any client machines), also increases the bandwidth available for client access to the system.

It should be noted that each of the internal switches 510 and external switches 512 is preferably in a separate enclosure containing its own power supply, processor, memory, ports and packet forwarding table. As an alternative, each internal switch 510 may be a separate pair of switch enclosures that are communicatively coupled to each other by a pair of multi Gb Ethernet cables. Thus, each internal switch 510 may be composed of one or more separate switch enclosures. Each switch enclosure may be a 1U height stackable switch unit that can be mounted in a standard telecommunications rack or equipment cabinet.

To illustrate the scalability of the network topology shown in **Fig. 5**, **Fig. 6** shows an instance where the number of server groups 508 in the system has doubled, in this case from eight to sixteen. The topology is such that doubling the number of server groups 508, calls for doubling the number of internal switches 510. Also, the number of ports in the external switches 612 that are actually used to communicate with the server group 508 are also doubled. An external switch 612 in this case has thirty-two network interface ports to communicatively couple with sixteen server groups (via their respective internal switches 510).

Thus, it can be seen that the network topology, in accordance with an embodiment of the invention shown in **Fig. 5**, scales linearly or proportionally, as the storage capacity is increased. In this case, doubling the number of server groups is expected to double the storage capacity of the OCL system. This also doubles the number of ports in the external switches, e.g. replacing the 16-port external switch 512 with a 32-port external switch 612, thus proportionally increasing the internal bandwidth of the system, including the bandwidth between server groups or clusters as described below.

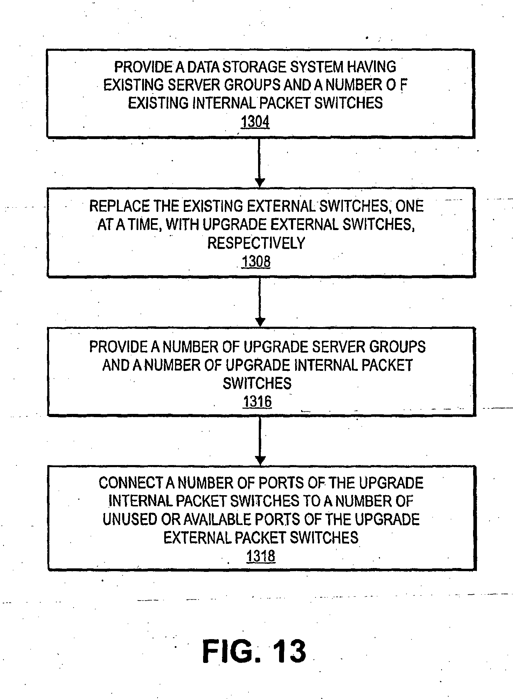

To illustrate the scalability of the network topology of **Figs. 5** and **6** in another way, consider the following example in conjunction with the flow diagram **of** **Fig. 13**. This diagram depicts a method where, starting with operation 1304, a data storage system is provided that has a number of existing server groups (*e.g.*, server groups 508_1 ..., 508_8, see **Fig. 5**). In this example, the number of existing server groups is eight (8). In operation 1308, the existing 16-port external switches 512 are replaced, one at a time, with 32-port switches 612, respectively. The redundancy, in the two external switches 512_1, 512_2, allows the system to continue to service client requests throughout the entire switch replacement process.

In operation 1316, a number of upgrade server groups and a number of upgrade internal packet switches are provided. See for example **Fig. 6**, where the upgrades include server groups 508_9..., 508_16, and internal packet switches 510_9...,510_167 Ports of the upgrade internal packet switches are then connected to a number of available ports of the external packet switches 612_1, 612_2 (operation 1318). Because there are at least two external switches 512_1, 512_2, and, more generally, preferably always a power of two, i.e. 2, 4, 8, etc., the order in which the upgrade process (described above) occurs is largely unimportant, and does not impair functionality of the system, so long as the external switches are replaced one at a time. In addition to this, using a double sized internal switch permits two existing server groups to be merged together. With a quadruple size switch, four existing server groups can be merged together, *i.e.* will share the same internal switch to communicate with an external switch. Each external or internal switch preferably has its own enclosure, power source, processor, memory, and forwarding table (*e.g.*, a separate, rack mount multi-Gb Ethernet or Infiniband switch).

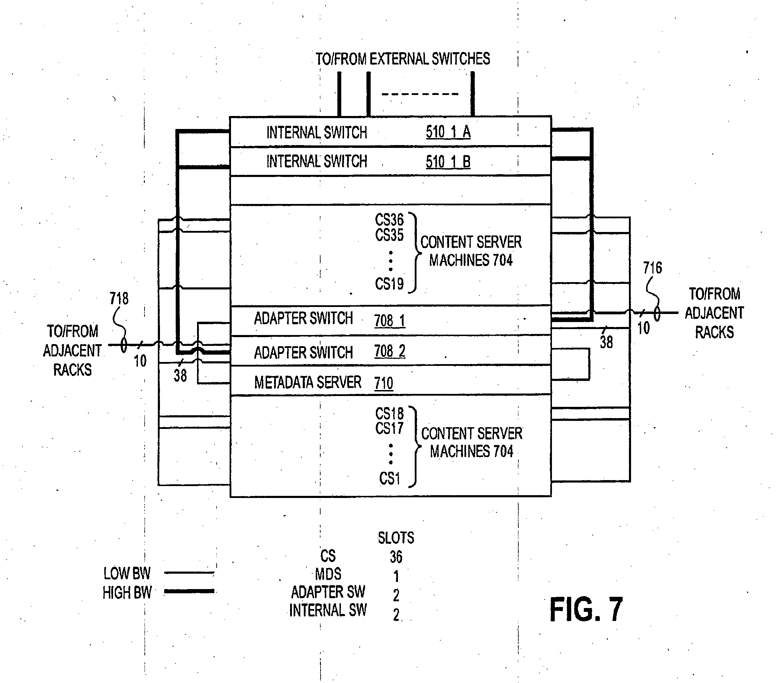

Turning now to **Fig. 7**, a block diagram showing the physical connections between different components of a server group and internal switch combination is shown, in accordance with an embodiment of the invention. The server group in this case is preferably housed in its own separate enclosure, *e.g.* within a single telco rack or equipment cabinet that has at least forty-one slots. In this example only, thirty-six of these slots are populated by thirty-six content server (CS) machines where each CS machine 704 is a separate server blade having its own separate enclosure. Each of the CS machines 704 is connected via a pair of network interface ports, to one of two adapter switches 708. The adapter switch 708 is a bandwidth adapter switch that has, in this example, thirty-six low bandwidth (*e.g.*, 1 Gb Ethernet) ports that are connected to thirty-six CS machines 704, respectively. In addition, a single low bandwidth port of the adapter switch 708 is connected to one of two metadata server (MDS) machine ports. In other words, the single metadata server machine 710 has two ports, each connected to a separate adapter switch 708.

Each adapter switch 708 is connected by a separate pair of high bandwidth (*e.g.*, 10 Gb Ethernet) links to both of the internal switches 510_1_A, 510_1_B. Each of these switches has one or more high bandwidth ports that are connected to an external switch (*e.g.*, external switch 512 or 612).

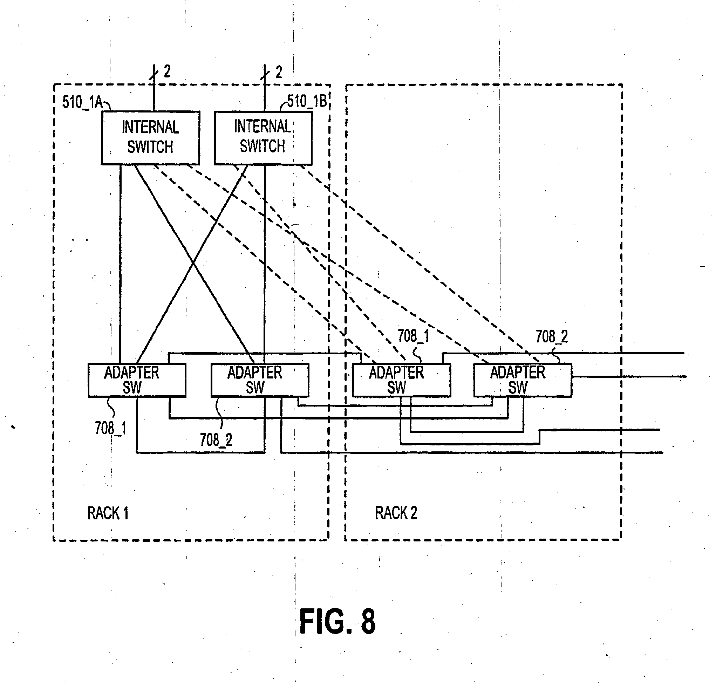

In the embodiment of **Fig. 7**, additional communication links may be provided so that a data storage server in one group can communicate with a data storage server of another group without having to go through an external switch. A "cluster" as used here refers to two or more of such sever groups that are connected to and in effect share an internal switch, to communicate with each other. For example, in **Fig. 7**, each of the additional links 716, 718 are a set of ten Ethernet cables that connect one of the adapter switches 708_1, 708_2 to the adapter switches of an adjacent rack. This is depicted in **Fig. 8** for a cluster of two racks. Note that the data storage servers of the server group that is housed in a rack are not shown, to avoid obscuring the point being made by this figure. In this embodiment, the adapter switches 708_1, 708_2 of each rack take away two ports from each high bandwidth, internal switch 510_1_A, 510_1_B. The cluster in **Fig. 8** can be scaled to four racks, if the internal switches 510_1_A, 510_1_B can each make an additional four ports available to the new adapter switches (these may have the same bandwidth). For example, if each internal switch 510_1_A, 510_1_B has a total of ten (10) ports, then scaling from two to four racks will keep the client bandwidth the same (in this case, staying at two multi-Gb Ethernet ports for each internal switch 5.10_1_A, 510_1_B).

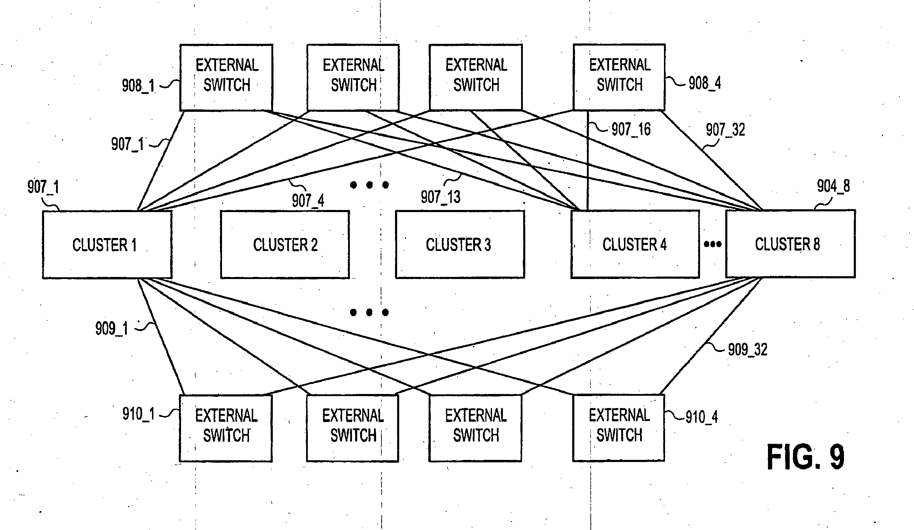

Turning now to **Fig. 9**, a block diagram of a data storage system, in accordance with another embodiment of the invention, is shown that has a network topology of clusters and external packet switches that are communicatively coupled to each other to improve scalability and maintain redundancy. In general, there may be two or more clusters 904, although in this case there are only eight in the system. Each cluster 904 may be in accordance with **Fig. 8**, where each cluster has two or more server groups (*e.g.*, each group in a separate rack) and a shared internal packet switch. The internal packet switch of each cluster is connected to each one of the external packet switches 908 by a separate packet transmission link 907. In other words, cluster 1 is connected to all four external switches 908_1 ..., 908_4, by four transmission links 907_1 ..., 907_4, respectively, and to all four external switches 910_1, ... 910_4 through the four transmission links 909_1, ... 909_4. In this embodiment, therefore, there are thirty-two transmission links that connect all eight clusters to the four external switches 908: As suggested above, each transmission link may be composed of a separate multi-Gb Ethernet cable where one end of each cable is attached to a network interface port of an internal switch and the other end is attached to a network interface port of an external switch.

To illustrate the scalability of the topology depicted in **Fig. 9**, consider the following example. Assume the system is shipped with only four clusters, and each external switch 908, 910 has half of its ports available for future expansion, *i.e.* not connected to any of the initial four clusters.

Next, assume that the system is upgraded with four additional clusters 904_5, ... 904_8. Each additional cluster has eight ports that are to be communicatively coupled to the existing external packet switches of the system, as shown in **Fig. 9**. Half of these ports, that is four of them, will be connected to the four external switches 908, and the remaining four will be connected to the four, external switches 910, respectively. In such an example, the upgrade does not involve replacing any of the existing external or internal switches of the existing system.

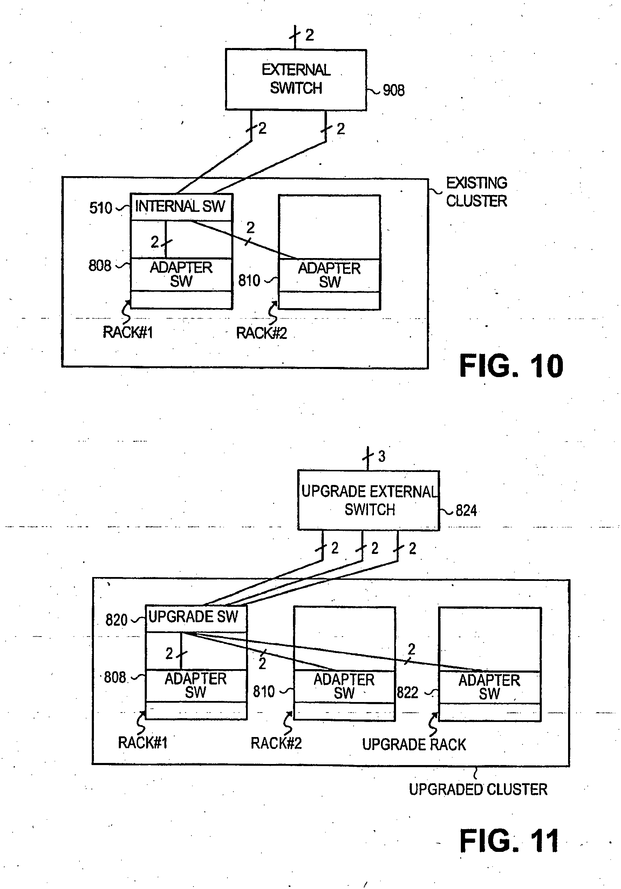

Turning now to **Fig. 10**, a data storage system is depicted that has a network topology in accordance with an embodiment of the invention, and that is upgraded by fifty percent as shown in **Fig. 11**. In **Fig. 10**, the existing system has a single existing cluster with two racks of data storage servers. A single 8-port internal switch 510 is shared by the two racks, via their respective adapter switches 808, 810. Two pairs of redundant links connect the cluster to a 6-port external switch 908. The bandwidth available for client access is two ports of the external switch 908.

Next, assume that the system is to be upgraded by about fifty percent; that is, a single upgrade rack is to be added (see **Fig. 11**). The upgrade rack may be essentially the same as the existing racks of the cluster. However, during upgrade, the 8-port internal switch 510 is replaced with one (820) having twelve ports (an increase of about fifty percent in bandwidth, assuming the ports of the upgrade switch 820 have about the same bandwidth as those of the existing switch). The upgrade rack is connected to the upgrade internal switch 820. In other words, the upgrade rack has been merged with the existing cluster, to create an upgraded cluster. In addition, the existing external switch that has six ports in use, is replaced with an upgrade external switch 824 that will have nine ports in use by the system. It can, therefore, be seen that the network topology causes a proportional or linear increase in not only the internal bandwidth between the servers in the racks and the external switch, but also a proportional or linear increase in the bandwidth available to connect with the client network. Note that in **Figs. 10** and **11**, although the system is shown with only a single external switch and a single cluster, the scaling methodology is equally applicable to larger systems, having multiple external switches and multiple clusters such as the one depicted in **Fig. 9** described above. For example, when replacing the internal switches for each cluster with one having twice the number of ports, two existing clusters can be merged together. If, instead, a quadruple size internal switch is provided, then four existing clusters can be merged together. This action may then be followed up with replacing the existing external switches with ones that have 2X, 4X, etc. the number of ports. Again, since there are at least two external switches they can be replaced one at a time while the system maintains functionality throughout the replacement of the external switches.

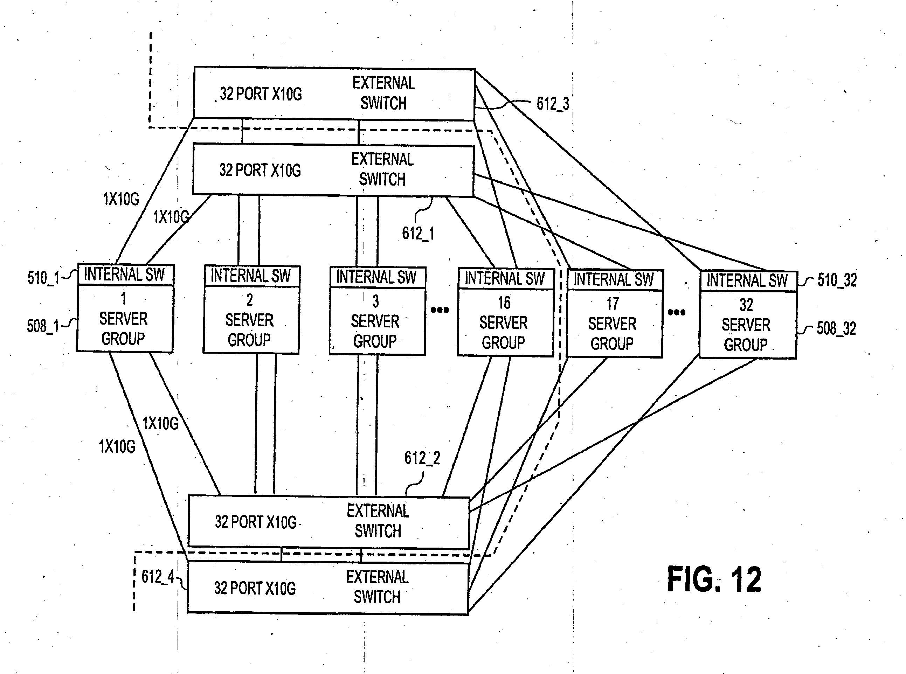

Turning now to **Fig. 12**, a network topology for a data storage system, in accordance with another embodiment of the invention, is depicted. **Fig. 12** depicts the storage system after it has been upgraded, from sixteen server groups 508_1 ..., 508_16, to thirty-two server groups 508_1 ..., 508_32. The additional hardware for the upgrade, namely server groups 508_17 ..., 508_32, internal switches 510_17 ..., 510_32, and external switches 612_3, 612_4 are shown to the right of the dotted line. Note that in the existing system, each server group 508_1 ..., 508_16 was communicatively coupled to each of the external switches 612_1 and 612_2, by way of a separate pair of 10-Gb Ethernet links. However, with the upgrade, one of the links of each existing pair has been disconnected and then reconnected to a port of the external switch 612_3 or 612_4. In this case, therefore, the bandwidth between an internal switch and an external switch remains the same with the upgrade, although the packet traffic will be split between the existing external switch 612_1 and the upgrade external switch 612_3. This also holds for the bandwidth between the upgrade internal switches 510_17 ..., 510_32, and the existing and upgrade external switches. In sum, as the storage capacity has doubled in this case with the upgrade, so has the total internal bandwidth between the server groups and the external switches. Also, the bandwidth to the client network has also doubled assuming that the upgrade external switch has at least the same number of ports to connect with a client machine or client network as does the existing external switch. Note that the existing server groups are now connected to both existing and upgrade switches. The upgrade server groups are also connected to both existing and upgrade external switches.

The above discussion regarding the physical connections of the different network topologies assumes that the software running in the data storage server machines is aware of how to access, *e.g.* via respective IP addresses, other data storage server machines in the system through the packet switching interconnect. Well known algorithms may be used to make each node of the system aware of the addresses of other nodes in the system. In addition, routing and/or forwarding tables within the internal and external switches can be populated using known routing algorithms, to avoid problem routes and instead select the most efficient path to deliver a packet from its source to its indicated destination address.

An embodiment of the invention may be a machine readable medium having stored thereon instructions which program one or more processors to perform some of the operations described above. In other embodiments, some of these operations might be performed by specific hardware components that contain hardwired logic. Those operations might alternatively be performed by any combination of programmed computer components and custom hardware components.

A machine-readable medium may include any mechanism for storing or transmitting information in a form readable by a machine (*e.g.*, a computer), not limited to Compact Disc Read-Only Memory (CD-ROMs), Read-Only Memory (ROMs), Random Access Memory (RAM), Erasable Programmable Read-Only Memory (EPROM), and a transmission over the Internet.

The invention is not limited to the specific embodiments described above. For example, although the OCL system was described with a current version that uses only rotating magnetic disk drives as the mass storage units, alternatives to magnetic disk drives are possible, so long as they can meet the needed speed, storage capacity, and cost requirements of the system. Accordingly, other embodiments are within the scope of the claims.

## Claims

1. A data storage system comprising:
a plurality of server groups (508), each group having a plurality of data storage servers, each data storage server comprising a metadata server and a plurality of content servers, wherein a file is stored in the system by being spread across two or more of the data storage servers of said groups;
wherein metadata servers, from the plurality of server groups (508), are active simultaneously and collaborate in deciding how many times and on what drives to replicate slices of the file;
a plurality of internal packet switches (510) to which the data storage servers of the plurality of server groups arc communicatively coupled, respectively; and
a first external packet switch (512) that is communicatively coupled to the plurality of internal packet switches (510), wherein client access to each of the data storage servers is through one of the internal packet switches (510) and the external packet switch (512).

2. The system of claim 1 wherein the data storage servers in each group communicate, at a physical layer, with a respective one of the internal packet switches (510) and not the first external packet switch (512).

3. The system of claim 2 further comprising a second external packet switch (512_2) that is communicatively coupled to the plurality of internal packet switches (510), to provide redundant client access to each of the data storage servers through one of the internal packet switches (510).

4. The system of claim 3 further comprising a plurality of adapter switches (708) each being communicatively coupled between a) the data storage servers of a respective one of the server groups (508) and b) a respective one of the internal packet switches (510), each adapter switch (708) having a) a plurality of low bandwidth ports coupled to the data storage servers of the respective server group (508) and b) a plurality of high bandwidth ports coupled to the respective internal packet switch (510).

5. The system of claim 1 further comprising a plurality of adapter switches (708) each being communicatively coupled between a) the data storage servers of a respective one of the server groups (508) and b) a respective one of the internal packet switches (510), each adapter switch (708) having a) a plurality of low bandwidth ports coupled to the data storage servers of the respective server group (508) and b) a plurality of high bandwidth ports coupled to the respective internal packet switch (510).

6. The system of claim 1 wherein each of the server groups (508) comprises a separate enclosure containing its own power supply and fan.

7. The system of claim 6 wherein the separate enclosure is a server rack.

8. The data storage system of claim 1 further comprising:
a plurality of clusters (904), each cluster having a plurality of the server groups and one of the plurality of internal packet switches (510), each server group in a cluster having a data storage server comprising a plurality of content servers and a metadata server communicatively coupled to the internal packet switch (510) of the cluster; and
a first plurality of external packet switches (908) that are communicatively coupled to the plurality of clusters, respectively, via the internal packet switch (510) of each cluster.

9. The system of claim 8 wherein the external packet switches (908) are Ethernet switches.

10. The system of claim 8 wherein the external packet switches (908) are Infiniband switches.

11. The system of claim 8 further comprising a second plurality of external packet switches (910) that are communicatively coupled to the plurality of clusters, respectively, via the internal packet switch (510) of each cluster.

12. The system of claim 8 wherein each of the external packet switches (908) has N ports half of which are coupled to the plurality of clusters, respectively, and half of which are available.

13. The system of claim 8 further comprising a second plurality of clusters, each cluster has N/2 ports that are communicatively coupled to the available ports of the external packet switches, respectively

## Patentansprüche

1. Datenspeichersystem, umfassend:
eine Mehrzahl von Servergruppen (508), wobei jede Gruppe eine Mehrzahl von Datenspeicherservern aufweist und jeder Datenspeicherserver einen Metadatenserver und eine Mehrzahl von Inhaltsservern aufweist, wobei eine Datei in dem System gespeichert wird, indem sie über zwei oder mehr der Datenspeicherserver der Gruppen aufgeteilt wird,
wobei Metadatenserver der Mehrzahl von Servergruppen (508) gleichzeitig aktiv sind und zusammenarbeiten, um zu entscheiden, wie viele Male und auf welchen Laufwerken Abschnitte der Datei repliziert werden;
eine Mehrzahl von internen Paketvermittlern (510), an welche die Datenspeicherserver der Mehrzahl von Servergruppen jeweils kommunikativ gekoppelt sind; und
einen ersten externen Paketvermittler (512), der kommunikativ an die Mehrzahl der internen Paketvermittler (510) gekoppelt ist, wobei der Client-Zugriff auf jeden der Datenspeicherserver durch einen der internen Paketvermittler (510) und den externen Paketvermittler (512) erfolgt.

2. System nach Anspruch 1, wobei die Datenspeicherserver in jeder Gruppe auf einer physikalischen Schicht mit einem jeweiligen der internen Paketvermittler (510) und nicht mit dem ersten externen Paketvermittler (512) kommunizieren.

3. System nach Anspruch 2, des Weiteren umfassend einen zweiten externen Paketvermittler (512_2), der kommunikativ an die Mehrzahl der internen Paketvermittler (510) gekoppelt ist, um redundanten Client-Zugriff auf jeden der Datenspeicherserver durch einen der internen Paketvermittler (510) bereitzustellen.

4. System nach Anspruch 3, des Weiteren umfassend eine Mehrzahl von Adapterschaltern (708), von denen jeder kommunikativ zwischen a) den Datenspeicherservern einer jeweiligen der Servergruppen (508) und b) einem jeweiligen der internen Paketvermittler (510) gekoppelt ist, wobei jeder Adapterschalter (708) a) eine Mehrzahl von Anschlüssen mit niedriger Bandbreite aufweist, die an die Datenspeicherserver der jeweiligen Servergruppe (508) gekoppelt sind, und b) eine Mehrzahl von Anschlüssen mit hoher Bandbreite aufweist, die an den jeweiligen internen Paketvermittler (510) gekoppelt sind.

5. System nach Anspruch 1, des Weiteren umfassend eine Mehrzahl von Adapterschaltern (708), von denen jeder kommunikativ zwischen a) den Datenspeicherservern einer jeweiligen der Servergruppen (508) und b) einem jeweiligen der internen Paketvermittler (510) gekoppelt ist, wobei jeder Adapterschalter (708) a) eine Mehrzahl von Anschlüssen mit niedriger Bandbreite aufweist, die an die Datenspeicherserver der jeweiligen Servergruppe (508) gekoppelt sind, und b) eine Mehrzahl von Anschlüssen mit hoher Bandbreite aufweist, die an den jeweiligen internen Paketvermittler (510) gekoppelt sind.

6. System nach Anspruch 1, wobei jede der Servergruppen (508) ein separates Gehäuse aufweist, das eine eigene Stromversorgung und einen eigenen Lüfter enthält.

7. System nach Anspruch 6, wobei das separate Gehäuse ein Server-Rack ist.

8. Datenspeichersystem nach Anspruch 1, des Weiteren umfassend:
eine Mehrzahl von Clustern (904), wobei jeder Cluster eine Mehrzahl der Servergruppen und einen der Mehrzahl von internen Paketvermittlern (510) hat, und wobei jede Servergruppe in einem Cluster einen Datenspeicherserver hat, der eine Mehrzahl von Inhaltsservern und einen Metadatenserver aufweist und kommunikativ an den internen Paketvermittler (510) des Clusters gekoppelt ist; und
eine erste Mehrzahl von externen Paketvermittlern (908), die jeweils über den internen Paketvermittler (510) jedes Clusters kommunikativ an die Mehrzahl von Clustern gekoppelt sind.

9. System nach Anspruch 8, wobei die externen Paketvermittler (908) Ethernet-Schalter sind.

10. System nach Anspruch 8, wobei die externen Paketvermittler (908) Infiniband-Schalter sind.

11. System nach Anspruch 8, des Weiteren umfassend eine zweite Mehrzahl von externen Paketvermittlern (910), die jeweils über den internen Paketvermittler (510) jedes Clusters kommunikativ an die Mehrzahl von Clustern gekoppelt sind.

12. System nach Anspruch 8, wobei jeder der externen Paketvermittler (908) N Anschlüsse hat, von denen jeweils die Hälfte an die Mehrzahl von Clustern gekoppelt und die Hälfe verfügbar ist.

13. System nach Anspruch 8, des Weiteren umfassend eine zweite Mehrzahl von Clustern, wobei jeder Cluster N/2 Anschlüsse hat, die jeweils kommunikativ an die verfügbaren Anschlüsse der externen Paketvermittler gekoppelt sind.

## Revendications

1. Système de stockage de données comprenant :
une pluralité de groupes de serveurs (508), chaque groupe comportant une pluralité de serveurs de stockage de données, chaque serveur de stockage de données comprenant un serveur de métadonnées et une pluralité de serveurs de contenu, dans lequel un fichier est stocké dans le système en étant réparti sur deux serveurs de stockage de données ou plus desdits groupes ;
dans lequel des serveurs de métadonnées, de la pluralité de groupes de serveurs (508), sont actifs simultanément et collaborent pour décider le nombre de fois que des tranches du fichier doivent être dupliquées et sur quels disques ;
une pluralité de commutateurs de paquets internes (510) auxquels les serveurs de stockage de données de la pluralité de groupes de serveurs sont respectivement couplés de manière à pouvoir communiquer ; et
un premier commutateur de paquets externe (512) qui est couplé de manière à pouvoir communiquer à la pluralité de commutateurs de paquets internes (510), dans lequel un accès client à chacun des serveurs de stockage de données s'effectue par l'intermédiaire de l'un des commutateurs de paquets internes (510) et du commutateur de paquets externe (512).

2. Système selon la revendication 1, dans lequel les serveurs de stockage de données dans chaque groupe communiquent, au niveau d'une couche physique, avec l'un respectif des commutateurs de paquets internes (510) et pas avec le premier commutateur de paquets externe (512).

3. Système selon la revendication 2, comprenant en outre un deuxième commutateur de paquets externe (512_2) qui est couplé de manière à pouvoir communiquer à la pluralité de commutateurs de paquets internes (510), pour fournir un accès client redondant à chacun des serveurs de stockage de données par l'intermédiaire de l'un des commutateurs de paquets internes (510).

4. Système selon la revendication 3, comprenant en outre une pluralité de commutateurs d'adaptateurs (708) qui sont chacun couplés de manière à pouvoir communiquer entre a) les serveurs de stockage de données de l'un respectif des groupes de serveurs (508) et b) l'un respectif des commutateurs de paquets internes (510), chaque commutateur d'adaptateur (708) comportant a) une pluralité de ports de petite largeur de bande couplés aux serveurs de stockage de données du groupe de serveurs (508) respectif et b) une pluralité de ports de grande largeur de bande couplés au commutateur de paquets interne (510) respectif.

5. Système selon la revendication 1, comprenant en outre une pluralité de commutateurs d'adaptateurs (708) qui sont chacun couplés de manière à pouvoir communiquer entre a) les serveurs de stockage de données de l'un respectif des groupes de serveurs (508) et b) l'un respectif des commutateurs de paquets internes (510), chaque commutateur d'adaptateur (708) ayant a) une pluralité de ports de petite largeur de bande couplés aux serveurs de stockage de données du groupe de serveurs (508) respectif et b) une pluralité de ports de grande largeur de bande couplés au commutateur de paquets interne (510) respectif.

6. Système selon la revendication 1, dans lequel chacun des groupes de serveurs (508) comprend une enceinte distincte contenant sa propre alimentation électrique et son propre ventilateur.

7. Système selon la revendication 6, dans lequel l'enceinte distincte est une baie de serveurs.

8. Système de stockage de données selon la revendication 1, comprenant en outre :
une pluralité de grappes (904), chaque grappe ayant une pluralité de groupes de serveurs et l'un de la pluralité de commutateurs de paquets internes (510), chaque groupe de serveurs dans une grappe ayant un serveur de stockage de données comprenant une pluralité de serveurs de contenu et un serveur de métadonnées couplés de manière à pouvoir communiquer au commutateur de paquets interne (510) de la grappe ; et
une première pluralité de commutateurs de paquets externes (908) qui sont couplés de manière à pouvoir communiquer respectivement à la pluralité de grappes par l'intermédiaire du commutateur de paquets interne (510) de chaque grappe.

9. Système selon la revendication 8, dans lequel les commutateurs de paquets externes (908) sont des commutateurs Ethernet.

10. Système selon la revendication 8, dans lequel les commutateurs de paquets externes (908) sont des commutateurs Infiniband.

11. Système selon la revendication 8, comprenant en outre une deuxième pluralité de commutateurs de paquets externes (910) qui sont couplés de manière à pouvoir communiquer respectivement à la pluralité de grappes par l'intermédiaire du commutateur de paquets interne (510) de chaque grappe.

12. Système selon la revendication 8, dans lequel chacun des commutateurs de paquets externes (908) comporte N ports dont une moitié sont couplés respectivement à la pluralité de grappes et l'autre moitié sont disponibles.

13. Système selon la revendication 8, comprenant en outre une deuxième pluralité de grappes, chaque grappe comporte N/2 ports qui sont couplés de manière à pouvoir communiquer respectivement aux ports disponibles des commutateurs de paquets externes.
